# EUROPEAN PATENT APPLICATION

(11) **EP 4 728 897 A1**
(43) Date of publication of application: **22.04.2026**
(21) Application number: 23941231.5
(22) Date of filing: 15.09.2023
(51) Int. Cl.: A24F 40/46, A24F 40/57

(54) **HEAT-NOT-BURN APPARATUS AND HEATING METHOD THEREFOR**

(30) Priority: 15.06.2023 CN 202310712978
(71) Applicant: Imiracle (HK) Limited, Kowloon, Hong Kong 999077 (HK)
(72) Inventor: FU, Yao, Hong Kong 999077 (CN); YAN, Xinyang, Hong Kong 999077 (CN); HAI, Tao, Hong Kong 999077 (CN)
(74) Representative: Vitina, Maruta
(86) International application number: PCT/CN2023/119084
(87) International publication number: WO 2024/255006

(57) **Abstract**

A heat-not-burning device(100) and its heating method. The device(100) includes a housing(10), a plurality of heating elements(50), and a control assembly(30). The housing(10) has an accommodating cavity(101); the plurality of heating elements(50) are uniformly mounted on the cavity wall of the accommodating cavity(101) to pierce into the aerosol generating article, which can increase the contact area between the heating elements(50) and the aerosol generating article and help improve the heating uniformity of the aerosol generating article. The control assembly(30) is mounted on the housing and independently electrically connected to each heating element(50). The control assembly(30) is configured to independently control the heating of each heating element(50), which facilitates sequentially and individually controlling one or more heating elements(50) to heat according to the analysis and calculation results of the cumulative heating duration and the total puff duration. This can reduce the heating duration of a single heating element(50) and the heating duration of the part of the aerosol generating article corresponding to each heating element(50), help avoid overheating of part of the aerosol generating article and energy waste, and contribute to improving the energy utilization rate and battery life of the entire device(100).

## Description

### TECHNICAL FIELD

The present invention relates to the technical field of heat-not-burning technology, and specifically to a heat-not-burning device and a heating method thereof.

### BACKGROUND

Heat-not-burning (HNB is the abbreviation of "Heat-not-burning") is a device mainly heats a tobacco article at a temperature below that which causes combustion to generate aerosol which contains nicotine or other components during the heating process for user to inhale. Compared with the traditional cigarette, the operating task of the HNB device is not to burn tobacco but to fully heat the tobacco articles to produce aerosol. Therefore, the heating temperature of the HNB device must not be excessively high to avoid generating toxic substances, and simultaneously must not be excessively low to avoid failure in aerosol production.

The Heat-not-burning devices usually adopt heating elements made of metal circuits printed on ceramics, which generate heat through the Joule effect after being energized to heat tobacco articles. The heating element is usually built inside of the center of the tobacco article. The heating temperature and heating duration of the tobacco article at the central position are different from those at the peripheral position. On one hand, the central position is prone to overheating, leading to a burnt taste in the later heating stage and release of toxic substances, or the peripheral part is prone to insufficient heating, resulting in failure of the tobacco article to generate aerosols and waste of the tobacco article. On the other hand, it may cause energy waste in the central position, low energy utilization rate, and endurance of the device.

### SUMMARY

The main technical problem to be solved by the present invention is to provide a heat-not-burning device and its heating method, aiming to improve the heating uniformity, energy utilization rate and battery life of the heat-not-burning device.

According to the first aspect, in an embodiment, a heat-not-burning device is provided, comprising:
A housing having a accommodating cavity for accommodating the aerosol generating article.

A plurality of heating elements, which are uniformly arranged on the cavity wall of the accommodating cavity for piercing into the aerosol generating article;
A control assembly mounted on the housing, wherein the control assembly is independently electrically connected to each of the heating elements, and the control assembly is configured to independently control the heating of each of the heating elements.

In an optional embodiment, the accommodating cavity extends in the first direction, and the plurality of heating elements are arranged along the first direction; the control assembly is configured to sequentially control each of the heating elements to perform independent heating in the first direction.

In an optional embodiment, the heating element comprises a plurality of heating teeth for piercing into the aerosol generating article; each heating tooth has an end portion and a tooth portion, wherein the end portion is fixed on the cavity wall of the accommodating cavity and electrically connected to the control assembly, and the tooth portion protrudes from the end portion for piercing into the aerosol generating article.

In an optional embodiment, a plurality of the heating teeth are arranged at intervals in the second direction, which is perpendicular to the first direction.

In an optional embodiment, within the same heating element, two adjacent heating teeth are staggered in the second direction.

In an optional embodiment, a plurality of mounting seats are provided on the cavity wall of the accommodating cavity in a one-to-one arrangement with the heating teeth, and the heating teeth are electrically connected to the control assembly through the corresponding mounting seats

The mounting seats comprise at least one first mounting seat and at least one second mounting seat, wherein the first mounting seat and the second mounting seat are arranged at intervals; wherein the end portion comprises a first connection end and a second connection end, the first connection end is connected to the first mounting seat, and the second connection end is connected to the second mounting seat.

In an optional embodiment, the housing comprises an upper cover and a lower cover. The upper cover is provided with a first accommodating groove, and the lower cover is provided with a second accommodating groove. The first accommodating groove and the second accommodating groove are mated and assembled to form the accommodating cavity.

The housing comprises a first magnetic component disposed on the upper cover and a second magnetic component disposed on the lower cover. The first magnetic component and the second magnetic component attract each other to lock the upper cover and the lower cover.

In an optional embodiment, both the upper cover and the lower cover are provided with the heating elements.

The control assembly comprises a first control unit mounted on the upper cover and a second control unit mounted on the lower cover. The first control unit and the second control unit are electrically connected through a conductive connection structure.

The conductive connection structure comprises a conductive hole and a conductive post matched with the conductive hole. The conductive hole is provided on one of the upper cover and the lower cover, and the conductive post is provided on the other one of the upper cover and the lower cover.

According to a second aspect, an embodiment provides a heating method for a heat-not-burning device, comprising:
Obtaining a current cumulative heating duration and a total puff duration of the heat-not-burning device;
Performing analysis and calculation on the current cumulative heating duration and the total puff duration to determine a calculation result;
Determining conditions and parameters of target heating elements required to participate in heating according to the calculation result;
Controlling the target heating elements to heat respectively.

In an optional embodiment, the step of determining conditions and parameters of target heating elements required to participate in heating according to the calculation result comprises:
If the ratio of the current cumulative heating duration to the total puff duration is less than or equal to 1/N, determining that among the N heating elements sequentially arranged in the first direction, the first heating element is the target heating element participating in heating;
If the ratio of the current cumulative heating duration to the total puff duration is greater than (n-1)/N and less than or equal to n/N, determining that among the N heating elements sequentially arranged in the first direction, the Nth heating element is the target heating element participating in heating;
If the ratio of the current cumulative heating duration to the total puff duration is greater than n/N and less than (n+1)/N, determining that among the N heating elements sequentially arranged in the first direction, the (n+1)th heating element is the target heating element participating in heating;
If the ratio of the current cumulative heating duration to the total puff duration is equal to 1, determining that the number of target heating elements participating in heating is zero;
wherein the first direction is the length direction of the aerosol generating article, N is the total number of heating elements, and n is a positive integer less than N.

According to the heat-not-burning device and its heating method of the above embodiments, the heat-not-burning device comprises a housing, heating elements, and a control assembly. The housing has an accommodating cavity for accommodating the aerosol generating article. A plurality of heating elements are provided, and the plurality of heating elements are uniformly arranged on the cavity wall of the accommodating cavity for piercing into the aerosol generating article. The control assembly is mounted on the housing, and the control assembly is independently electrically connected to each heating element. The control assembly is configured to independently control the heating of each heating element. Since the heating elements can pierce into the aerosol generating article, this can increase the contact area between the heating elements and the aerosol generating article, help improve the heating uniformity of the aerosol generating article, reduce the difference in heating temperature of the aerosol generating article at various positions, and reduce the occurrence of burnt taste in the later heating stage and waste of the aerosol generating article. Moreover, the control assembly can independently control the heating of each heating element, which facilitates sequentially and individually controlling one or more heating elements to heat according to the analysis and calculation results of the cumulative heating duration and the total puff duration. This can reduce the heating duration of a single heating element and the heating duration of the part of the aerosol generating article corresponding to each heating element, help avoid overheating of part of the aerosol generating article, avoid energy waste, and help improve the energy utilization rate and battery life of the entire device.

### BRIEF DESCRIPTION OF THE DRAWINGS

To more clearly illustrate the technical solutions in the embodiments of the present application or the prior art, the accompanying drawings required for describing the embodiments or the prior art will be briefly introduced below. Obviously, the accompanying drawings in the following description are only some embodiments of the present application, and for those of ordinary skill in the art, other accompanying drawings can also be obtained based on these drawings without exerting creative efforts.
Figure 1 is a schematic structural diagram of a heat-not-burning device according to an embodiment;
Figure 2 is a schematic structural diagram of the heat-not-burning device according to an embodiment in a state where the upper cover and the lower cover are open;
Figure 3 is a front view of the upper cover according to an embodiment;
Figure 4 is a schematic internal structural diagram of the upper cover according to an embodiment after being cut open;
Figure 5 is a perspective view of the lower cover according to an embodiment;
Figure 6 is a front view of the lower cover according to an embodiment;
Figure 7 is a schematic internal structural diagram of the lower cover according to an embodiment after being cut open;
Figure 8 is a step flow chart of a heating method for the heat-not-burning device according to an embodiment;
Figure 9 is a step flow chart of a heating method for the heat-not-burning device according to another embodiment.

In the figure: 100. Heat-not-burning device; 10. Housing; 1. Upper cover; 101. Accommodating cavity; 11. First accommodating groove; 12. Conductive post; 13. First magnetic component; 14. First mounting cavity; 2. Lower cover; 21. Second accommodating groove; 22. Conductive groove; 23. Second magnetic component; 24. Charging connector; 25. Second mounting cavity; 30. Control assembly; 301. PCB bridge board; 31. First control unit; 32. Second control unit; 4. Mouthpiece; 41. Second end opening; 5. Power supply module; 50. Heating element; 51. First heating element; 52. Second heating element; 501. Heating tooth; 502. End portion; 5021. First connection end; 5022. Second connection end; 503. Tooth portion; 6. Mounting seat; 61. First mounting seat; 62. Second mounting seat.

### DESCRIPTION OF THE EMBODIMENTS

Below is a further detailed description of the present invention through specific embodiments in conjunction with the accompanying drawings. Similar elements in different embodiments are assigned associated similar reference numerals. In the following embodiments, many detailed descriptions are provided to facilitate a better understanding of the present application. However, those skilled in the art can easily recognize that some of these features may be omitted under different circumstances, or replaced by other elements, materials, or methods. In certain cases, some operations related to the present application are not shown or described in the specification. This is to avoid the core part of the present application being obscured by excessive descriptions. For those skilled in the art, detailed descriptions of these related operations are unnecessary, as they can fully understand the relevant operations based on the descriptions in the specification and general technical knowledge in the field.

In addition, the features, operations, or characteristics described in the specification can be combined in any appropriate manner to form various embodiments. Meanwhile, the steps or actions in the method descriptions can also be reordered or adjusted in a manner obvious to those skilled in the art. Therefore, the various sequences in the specification and accompanying drawings are only for clearly describing a specific embodiment and do not imply a mandatory order, unless otherwise specified that a certain order must be followed.

In this document, the serial numbers assigned to components, such as "first", "second", etc., are only used to distinguish the described objects and do not have any sequential or technical meaning. Unless otherwise specified, the terms "connection" and "coupling" as used in this application include both direct and indirect connections (couplings).

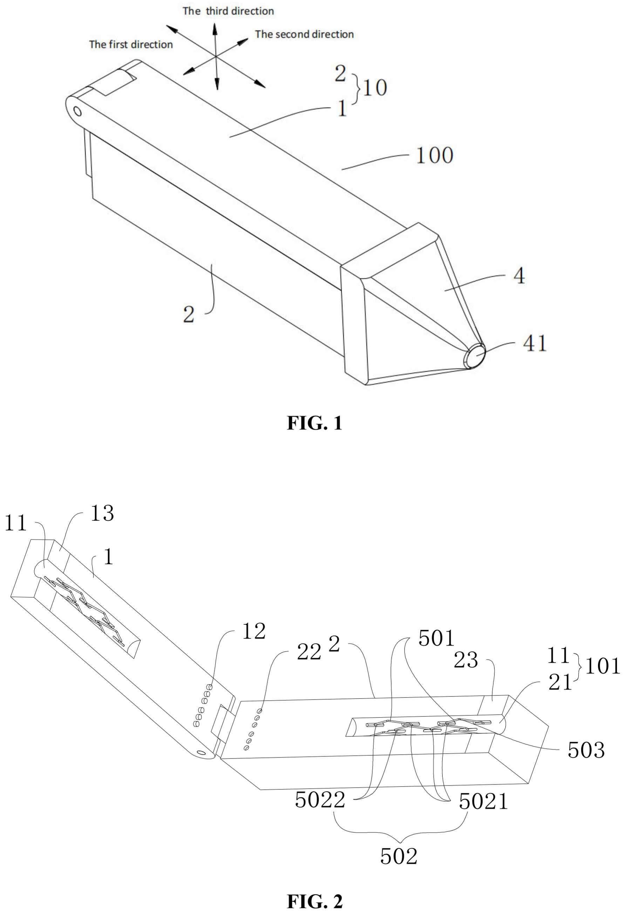

Please refer to FIGS. 1 to 7. The present application discloses a heat-not-burning device 100, which comprises a housing 10, heating elements 50, and a control assembly 30. The housing 10 has an accommodating cavity 101 for accommodating aerosol generating articles (which may be tobacco articles such as cigarettes, cut tobacco, etc.). The heating elements 50 are mounted on the housing 10, and the heating elements 50 protrude from the cavity wall of the accommodating cavity 101 for piercing into the aerosol generating articles. A plurality of heating elements 50 are provided and uniformly arranged on the cavity wall of the accommodating cavity 101. The control assembly 30 is mounted on the housing 10, and the control assembly 30 is independently electrically connected to each heating element 50. The control assembly 30 is configured to independently control the heating of each heating element 50.

Since the heating elements 50 can pierce into the aerosol generating article, this increases the contact area between the heating elements 50 and the aerosol generating article, helps improve the heating uniformity of the aerosol generating article, reduces the difference in heating temperature of the aerosol generating article at various positions, and minimizes the occurrence of burnt taste in the later heating stage and waste of the aerosol generating article.

Moreover, the heat-not-burning device 100 can independently control the heating of each heating element 50. For example, based on the analysis and calculation results of the cumulative heating duration and the total puff duration, it can sequentially and individually control one or more heating elements 50 to heat. Among them, the cumulative heating duration refers to the total heating time of the heating elements 50 accumulated during a single puff; the total puff duration is the total heating time determined according to the volume of the accommodating cavity 101 to ensure that all aerosol generating articles filled in the accommodating cavity 101 are fully heated without generating toxic substances. In other words, the total puff duration is determined based on the volume of the accommodating cavity 101. For instance, the control assembly 30 can gradually increase the number of heating elements based on the ratio of the cumulative heating duration to the total puff duration, and sequentially control one or two of the plurality of heating elements 50 to heat independently by levels until the ratio reaches 1, completing the heating of all heating elements 50 and the entire aerosol generating article. This reduces the heating duration of a single heating element 50 and the heating duration of the part of the aerosol generating article corresponding to each heating element 50, avoids overheating of part of the aerosol generating article and energy waste, and helps improve the energy utilization rate and battery life of the entire device.

Specifically, in some embodiments, the accommodating cavity 101 may be a receiving hole. The receiving hole extends in a first direction, and the heating elements 50 are arranged continuously or at intervals in the first direction, which is the length direction of the heat-not-burning device 100. The control assembly 30 can sequentially control each heating element 50 to heat independently in the first direction according to the ratio of the cumulative heating duration to the total puff duration. For example, as the ratio gradually increases, one heating element 50 can be controlled to heat independently at a time in the first direction by levels until the ratio reaches 1, completing the heating of all heating elements 50 and the entire aerosol generating article. This simulates the actual smoking process, ensuring that the part of the aerosol generating article corresponding to each heating element 50 is fully heated without overheating, further improving energy utilization rate and user experience.

In one embodiment, the heating element 50 comprises a plurality of heating teeth 501 arranged at intervals in a second direction. The second direction is the width direction of the heat-not-burning device 100, which is perpendicular to the first direction, and each heating tooth 501 extends in the first direction. Two adjacent heating teeth 501 in the second direction are staggered, which helps to uniformly arrange the heating teeth 501 on the cavity wall of the accommodating cavity 101 and improve the heating uniformity of the entire heat-not-burning device 100.

For example, please refer to FIGS. 2, 3, 5, and 6. Three heating teeth 501 may be provided. The three heating teeth 501 are arranged at intervals in the second direction, and the heating tooth 501 located at the middle position among the three heating teeth 501 is staggered from the heating teeth 501 located at the end positions in the second direction.

Of course, optionally, the number of heating teeth 501 is not limited to three, and may be two, four, five or more. For a relatively large number of heating teeth 501, the plurality of heating teeth 501 may be arranged in rows and columns respectively in the first direction and the second direction to achieve uniform arrangement on the side wall of the accommodating cavity 101.

In addition, the heating teeth 501 in the heating element 50 may also be arranged in alignment in the second direction, as long as two adjacent heating elements 50 are continuous in the first direction or spaced relatively close to each other. Alternatively, in some other embodiments, the heating element 50 may further comprise heating wires uniformly laid on the cavity wall of the accommodating cavity 101, and the heating wires have piercing parts for piercing into the aerosol generating article.

In some embodiments, please continue to refer to FIGS. 2, 3, 5, and 6. The each heating tooth 501 is an elongated structure, and the length direction of the heating tooth 501 is the same as the first direction. The heating tooth 501 has an end portion 502 and a tooth portion 503. The end portion 502 of the heating tooth 501 is fixed on the cavity wall of the accommodating cavity 101 and electrically connected to the control assembly 30. The tooth portion 503 of the heating tooth 501 protrudes from the end portion 502 for piercing into the aerosol generating article. The end portion 502 of the heating tooth 501 comprises a first connection end 5021 and a second connection end 5022 located at both ends in the first direction. The tooth portion 503 of the heating tooth 501 is fixedly connected between the first connection end 5021 and the second connection end 5022, and protrudes toward the center of the accommodating cavity 101 to form a piercing tip for piercing into the aerosol generating article. This piercing tip helps increase the piercing depth of the heating tooth 501 into the aerosol generating article, thereby increasing the contact area between the heating tooth 501 and the aerosol generating article and improving the heating uniformity of the aerosol generating article by the heating tooth 501.

In other embodiments, to increase the contact area between the heating tooth 501 and the aerosol generating article, a plurality of branch structures may be provided between the first connection end 5021 and the second connection end 5022. The plurality of branch structures protrude toward the center of the accommodating cavity 101 to form short teeth for embedding into the aerosol generating article.

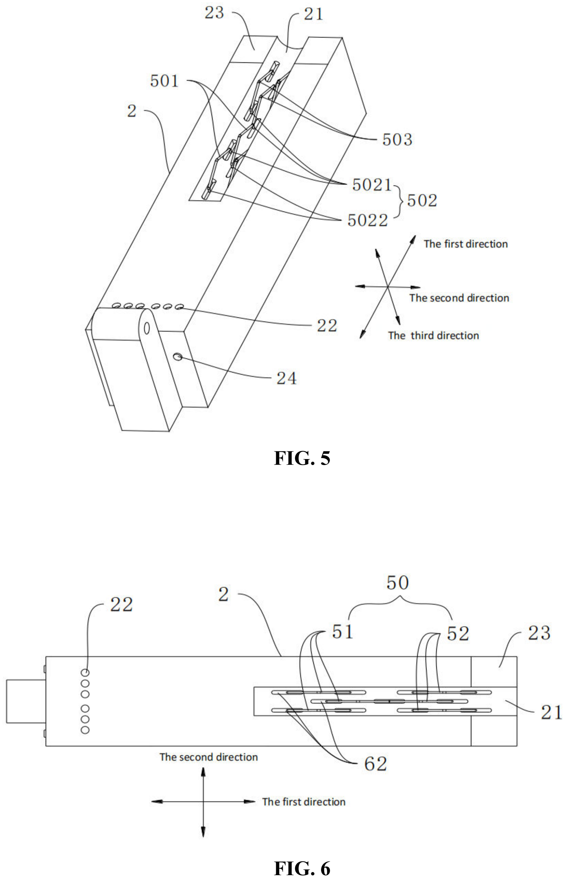

In some embodiments, please refer to FIGS. 2 and 5. Mounting seats 6 are provided on the cavity wall of the accommodating cavity 101 in a one-to-one arrangement with the heating teeth 501. The accommodating cavity 101 is formed by assembling and mating a first accommodating groove 11 and a second accommodating groove 21 in a third direction, where the third direction, the second direction, and the first direction are perpendicular to each other. The surface of the mounting seat 6 facing the inside of the accommodating cavity 101 in the third direction is not lower than the cavity wall surface of the accommodating cavity 101. The heating tooth 501 is electrically connected to the control assembly 30 disposed in the housing 10 through the corresponding mounting seat 6. The heating tooth 501 may be made of materials such as nickel-chromium alloy, iron-chromium alloy, or stainless steel, and the mounting seat 6 may be made of low-resistance materials such as copper alloy, silver-palladium alloy, or pure gold.

The mounting seat 6 comprises at least one first mounting seat 61 and at least one second mounting seat 62, wherein the first mounting seat 61 and the second mounting seat 62 are arranged at intervals.. The first mounting seat 61 is a low-voltage mounting seat, and the second mounting seat 62 is a high-voltage mounting seat. The first connection end 5021 of the heating tooth 501 is fixedly connected to the first mounting seat 61, and the second connection end 5022 is fixedly connected to the second mounting seat 62. After the two ends of the heating tooth 501 are respectively connected to the high-voltage mounting seat and the low-voltage mounting seat, they form a resistor for heating the aerosol generating article. By controlling the power supply power of the heating tooth 501, the heating temperature of the heating tooth 501 can be controlled to ensure the aerosol generating article has an appropriate heating temperature.

Optionally, in other embodiments, the heating element 50 may further comprise a plurality of heating rods arranged at intervals in the second direction. One end of each heating rod is a connection end, and the other end is a heating end. The heating rod passes through the cavity wall of the accommodating cavity 101, the connection end of the heating rod is located inside the housing 10 and electrically connected to the control assembly 30, and the heating end protrudes into the accommodating cavity 101 through the cavity wall of the accommodating cavity 101 to be embedded in the aerosol generating article.

In some embodiments, the heating element 50 comprises a first heating element 51 and a second heating element 52 arranged in pairs. The first heating element 51 and the second heating element 52 are staggered in the first direction. That is, in a structure with more than three heating elements 50, a second heating element 52 is arranged between two adjacent first heating elements 51, and a first heating element 51 is arranged between two adjacent second heating elements 52.

Please refer to FIGS. 2, 3, 5, and 6. For the first heating element 51, the first connection ends 5021 of the plurality of heating teeth 501 are located on the side of the second connection ends 5022 facing the second heating element 52 in the first direction. This facilitates the connection between the first connection ends 5021 of the heating teeth 501 in the first heating element 51 and the first connection ends 5021 of the heating teeth 501 in the second heating element 52, thereby reducing the number of first mounting seats 61 provided on the housing 10. In addition, it also facilitates the electrical connection between the first mounting seats 61 corresponding to the first heating element 51 and the first mounting seats 61 corresponding to the second heating element 52 inside the housing 10, thus reducing the number of wires connecting the first mounting seats 61 to the control assembly 30.

Correspondingly, the first connection ends 5021 of the plurality of heating teeth 501 in the second heating element 52 may also be located on the side of the second connection ends 5022 facing the first heating element 51 in the first direction. This facilitates the connection of multiple first connection ends 5021 to the same first mounting seat 61, or the electrical connection of multiple first mounting seats 61, and also helps reduce the number of first mounting seats 61 provided on the housing 10 or the number of wires connecting the first mounting seats 61 to the control assembly 30.

Of course, in other embodiments, two adjacent first heating elements 51 may form a first heating group, and two adjacent second heating elements 52 may form a second heating group. The first heating group and the second heating group are staggered in the first direction, that is, two first heating elements 51 and two second heating elements 52 are staggered in the first direction. In such a structure, among the adjacent first heating element 51 and second heating element 52, the first connection ends 5021 of some heating teeth 501 in the first heating element 51 may be located on the side of the second connection ends 5022 away from the second heating element 52 in the first direction. Alternatively, the first connection ends 5021 of some heating teeth 501 in the second heating element 52 may be located on the side of the second connection ends 5022 away from the first heating element 51 in the first direction. In this way, two adjacent first heating elements 51 or two adjacent second heating elements 52 have first connection ends 5021 close to each other, so as to facilitate the connection of multiple first connection ends 5021 in the first heating element 51 to the same first mounting seat 61, or the electrical connection of multiple first mounting seats 61 corresponding to the first heating element 51.

In some embodiments, please refer to FIGS. 2, 3, 5, and 6. The first heating element 51 is provided with three heating teeth 501. The heating tooth 501 located at the middle position in the second direction is closer to or farther from the second heating element 52 in the first direction, so as to realize the staggered arrangement of two adjacent heating teeth 501 in the first heating element 51 in the second direction. Correspondingly, the second heating element 52 is also provided with three heating teeth 501. The heating tooth 501 located at the middle position in the second direction is closer to or farther from the first heating element 51 in the first direction, so as to realize the staggered arrangement of two adjacent heating teeth 501 in the second heating element 52 in the second direction.

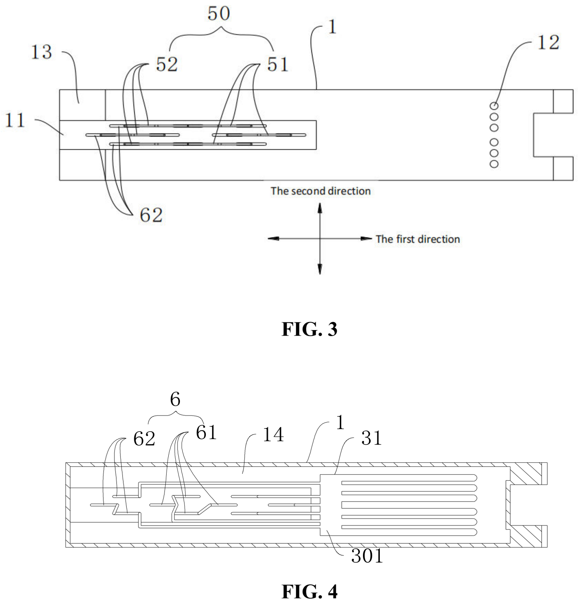

Further, the first connection ends 5021 of at least two adjacent heating teeth 501 arranged in the first direction are connected and connected to the same first mounting seat 61. The two adjacent heating teeth 501 may be the heating tooth 501 located at the middle position in the second direction in the first heating element 51 and the heating tooth 501 located at the middle position in the second direction in the second heating element 52, as shown in FIGS. 5 and 6. The two adjacent heating teeth 501 may also be the heating tooth 501 located at the end position in the second direction in the first heating element 51 and the heating tooth 501 located at the end position in the second direction in the second heating element 52, as shown in FIG. 3. Such an arrangement helps reduce the number of mounting seats 6 on the cavity wall of the accommodating cavity 101, and also reduces the number of connecting wires between the mounting seats 6 and the control assembly 30.

In some embodiments, the first connection ends 5021 of the plurality of heating teeth 501 in the same heating element 50 (i.e., the plurality of heating teeth 501 in the second direction) are located on the same side of the second connection ends 5022, and the first mounting seats 61 corresponding to these heating teeth 501 are also located on the same side of the second mounting seats 62. This facilitates the electrical connection of multiple first mounting seats 61 corresponding to the same heating element 50, so as to reduce the length and number of connecting wires between the first mounting seats 61 and the control assembly 30 without affecting the independent heating of each heating element 50.

For adjacent heating teeth 501 belonging to two heating elements 50 respectively (i.e., in the embodiment where the first connection ends 5021 of two heating teeth 501 arranged in the first direction are close to each other), the multiple first mounting seats 61 corresponding to the two adjacent heating elements 50 are electrically connected. This can also reduce the length and number of connecting wires between the first mounting seats 61 and the control assembly 30 without affecting the independent heating of each heating element 50.

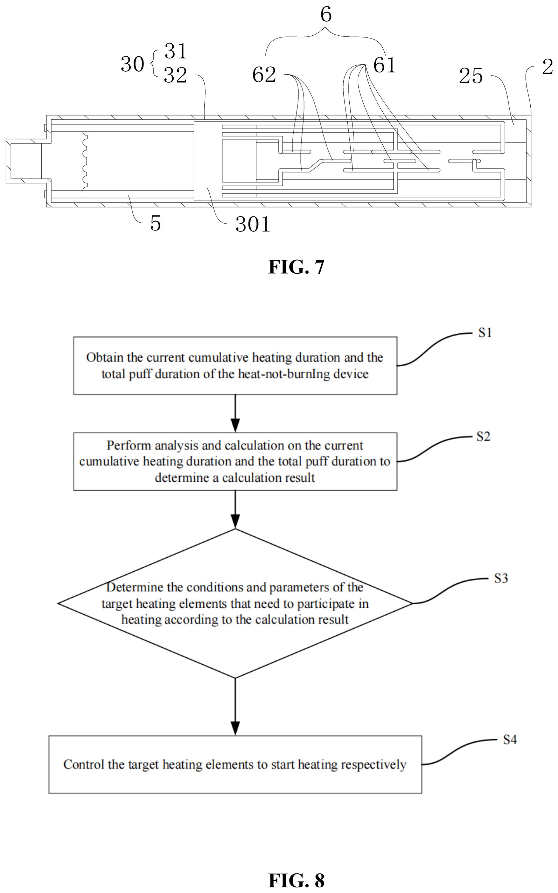

Please refer to FIGS. 4 and 7. In FIG. 4, among the adjacent first heating element 51 and second heating element 52, the four first mounting seats 61 connected to the first connection ends 5021 of the six heating teeth 501 are connected by jumper wires and then connected to the control assembly 30 through the same connecting wire. In FIG. 7, among the adjacent first heating element 51 and second heating element 52, among the five first mounting seats 61 connected to the first connection ends 5021 of the six heating teeth 501, two of the first mounting seats 61 are connected by jumper wires and then connected to the control assembly 30 through one connecting wire, and the other three first mounting seats 61 are also connected by jumper wires and then connected to the control assembly 30 through the same connecting wire.

In the embodiment where the arrangement directions of the first connection ends 5021 and the second connection ends 5022 in each heating tooth 501 in the same heating element 50 are consistent, please refer to FIGS. 4 and 7. The second mounting seats 62 corresponding to each heating tooth 501 may also be conductively connected and then electrically connected to the control assembly 30 through one or two wires, so as to reduce the length and number of connecting wires between the mounting seats 6 and the control assembly 30 without affecting the independent control of each heating element 50.

Of course, the structure in which multiple first mounting seats 61 are connected and then connected to the control assembly 30 through one wire can also be applied in the same heating element 50, that is, in the embodiment where the relative positions of the first connection ends 5021 and the second connection ends 5022 of two adjacent heating teeth 501 in the second direction are inconsistent. It can also be applied in different heating elements 50 respectively, that is, in the embodiment where among two adjacent heating teeth 501 in the first direction, the first connection end 5021 of one heating tooth 501 is located at the second connection end 5022 away from the other heating tooth 501. The structure in which multiple second mounting seats 62 are connected and then connected to the control assembly 30 through one or two wires can also be applied in the embodiment where the arrangement directions of the first connection ends 5021 and the second connection ends 5022 of different heating teeth 501 in the same heating element 50 are inconsistent.

Of course, in order to avoid poor contact between one of the wires in the mounting seat 6 and the control assembly 30 affecting the operation of multiple heating teeth 501, a high-voltage connecting wire and a low-voltage connecting wire can be respectively configured for the mounting seat 6 of each heating tooth 501 to ensure that each heating tooth 501 is relatively independent.

In some embodiments, please refer to FIG. 2. The heat-not-burning device 100 comprises an upper cover 1 and a lower cover 2. The upper cover 1 and the lower cover 2 are rotatably connected through rotating shafts at their respective ends, such as a hinge connection. The end of the upper cover 1 away from the rotating shaft is provided with a first accommodating groove 11, and the end of the lower cover 2 away from the rotating shaft is provided with a second accommodating groove 21. The first accommodating groove 11 and the second accommodating groove 21 can be mated and assembled during the rotation of the upper cover 1 and the lower cover 2 to form an accommodating cavity 101 for placing the aerosol generating article. Heating elements 50 are provided on both the groove wall of the first accommodating groove 11 and the groove wall of the second accommodating groove 21.

A locking structure is provided on the housing 10 between the upper cover 1 and the lower cover 2. Specifically, the locking structure comprises a first magnetic component 13 provided on the upper cover 1 and a second magnetic component 23 provided on the lower cover 2. After the upper cover 1 and the lower cover 2 are mated and assembled, the first magnetic component 13 and the second magnetic component 23 attract each other to lock the upper cover 1 and the lower cover 2, preventing the upper cover 1 and the lower cover 2 from automatically loosening and causing the aerosol generating article to fall out of the accommodating cavity 101.

Of course, in other embodiments, the upper cover 1 and the lower cover 2 may be fixedly connected, so that the aerosol generating article enters the accommodating cavity 101 from the opening of the accommodating cavity 101 at the end of the housing 10 in the length direction, and the heating teeth 501 pierce into the aerosol generating article.

In some embodiments, both the upper cover 1 and the lower cover 2 are hollow shell structures. The upper cover 1 has a first mounting cavity 14 inside, and the lower cover 2 has a second mounting cavity 25 inside. The notch of the first accommodating groove 11 on the upper cover 1 is arranged away from the first mounting cavity 14, and the notch of the second accommodating groove 21 on the lower cover 2 is arranged away from the second mounting cavity 25. The control assembly 30 comprises a first control unit 31 installed in the first mounting cavity 14 and a second control unit 32 installed in the second mounting cavity 25. Each control unit comprises an electrically connected PCB bridge board 301 and an IC module. The plurality of mounting seats 6 provided on the cavity wall of the accommodating cavity 101 are connected to the corresponding PCB bridge board 301 through connecting wires, and the IC module is used to control the independent heating of each heating element 50 in the corresponding upper cover 1 or lower cover 2.

Please refer to FIGS. 2, 3, 5, and 6. The first control unit 31 and the second control unit 32 are electrically connected through a conductive connection structure. The conductive connection structure comprises a conductive post 12 provided on the upper cover 1 and a conductive groove 22 provided on the lower cover 2. The conductive post 12 is electrically connected to the first control unit 31, and the conductive groove 22 is electrically connected to the second control unit 32. After the upper cover 1 and the lower cover 2 are assembled and mated, the conductive post 12 is inserted and matched with the conductive groove 22 to realize the electrical connection between the first control unit 31 and the second control unit 32.

Further, a power supply module 5 is also provided in the second mounting cavity 25 of the lower cover 2. The power supply module 5 is electrically connected to the second control unit 32 in the lower cover 2. The power supply module 5 comprises a charging connector 24 provided at the end of the lower cover 2 in the length direction of the housing 10. The charging connector 24 is used for external power supply to charge the heat-not-burning device 100.

In some embodiments, please refer to FIG.1. In the heat-not-burning device 100, the outer contour of the upper cover 1 is roughly a cuboid, and the positions of the upper cover 1 corresponding to the edges and corners of the cuboid may be provided with rounded transitions. The outer contour of the lower cover 2 is also roughly a cuboid, and the positions of the lower cover 2 corresponding to the edges and corners of the cuboid may also be provided with rounded transitions. This prevents the sharp parts on the outer contours of the upper cover 1 and the lower cover from scratching the user. After the upper cover 1 and the lower cover 2 are mated and assembled, the housing 10 is formed. The cross-sectional shape of the housing 10 in its length direction is roughly a rectangle, and the positions of the cross-sectional shape corresponding to the corners of the rectangle may be provided with rounded transitions.

The orifice of the accommodating hole formed by the mating and assembling of the first accommodating groove 11 and the second accommodating groove 21 is located at the end of the housing 10 in the length direction of the housing 10. A mouthpiece 4 is also provided at one end of the housing 10 in the length direction. The mouthpiece 4 has a first end opening and a second end opening 41 at both ends in the length direction of the housing 10, and the first end opening is in communication with the second end opening 41. The mouthpiece 4 is nested at the end of the housing 10 through the first end opening, and the first end opening of the mouthpiece 4 is in communication with the orifice of the accommodating hole. In this way, the aerosol generated in the accommodating hole can be inhaled by the user through the orifice of the accommodating hole, the first end opening, and the second end opening 41 in sequence. The cross-sectional outer contour shape of the end of the mouthpiece 4 with the first end opening is roughly a rectangle, and the edges and corners of the end of the mouthpiece 4 are provided with rounded transitions. The shape of the first end opening may also be a rectangle, which matches the outer contour shape of the end of the housing 10. The mouthpiece 4 is made of silica gel material, and the first end opening of the mouthpiece 4 is sleeved on the outside of the housing 10 to achieve fixed connection with the housing 10. The shape of the second end opening is circular, and the overall cross-sectional size of the second end is smaller than that of the first end, so as to facilitate the user to hold the second end opening 41 in the mouth.

In one embodiment, during the use of the heat-not-burning device 100, the heating teeth 501 pierce into the aerosol generating article. According to the current cumulative heating duration and the total heating duration of the heat-not-burning device 100, one or more heating elements 50 at different positions in the length direction of the housing 10 are controlled to heat sequentially under appropriate temperature conditions. When the cumulative heating duration is equal to the total puff duration, all heating elements 50 complete one heating cycle. On the one hand, this ensures that each part of the aerosol generating article arranged in the length direction of the accommodating cavity 101 is fully and uniformly heated, without burnt taste or toxic substances, and also avoids overheating of a single heating element 50. On the other hand, it helps avoid energy waste, effectively improves energy utilization rate, and enhances the battery life of the entire heat-not-burning device 100.

The present application also discloses a heating method for the heat-not-burning device 100 according to any of the above embodiments. Please refer to FIG. 8. The heating method comprises:
S1: Obtain the current cumulative heating duration and the total puff duration of the heat-not-burn device;
S2: Perform analysis and calculation on the current cumulative heating duration and the total puff duration to determine a calculation result;
S3: Determine the conditions and parameters of the target heating elements required to participate in heating according to the calculation result;
S4: Controlling the target heating elements to heating respectively.

In some embodiments, in the above step S1, the cumulative heating duration refers to the total heating time of the heating elements 50 accumulated during a single puff. The total puff duration may be the total heating time determined according to the volume of the accommodating cavity 101 to ensure that all aerosol generating articles filled in the accommodating cavity 101 are fully heated without generating toxic substances. The control assembly 30 of the heat-not-burn device 100 obtains the above-mentioned cumulative heating duration and total puff duration.

In the above step S2, the control assembly 30 analyzes and calculates the current cumulative heating duration and the total puff duration to obtain the calculation result. The analysis and calculation here may be calculating the ratio of the current cumulative heating duration to the total puff duration, or simply determining whether the current cumulative heating duration is greater than a set cumulative heating duration. The set cumulative heating duration is less than the total puff duration, and the set cumulative heating duration is determined by the user according to usage conditions. For example, the set cumulative heating duration may be half, one-third, or two-thirds of the total puff duration.

In the above step S3, the control assembly 30 still determines the conditions and parameters of the target heating elements that need to participate in heating according to the calculation result in step S2. The conditions may be the position conditions of the target heating elements. For example, they may be the first one sequentially arranged along the length direction of the accommodating cavity 101, the adjacent first and second ones, or multiple ones arranged at intervals or dispersedly. If a plurality of heating elements 50 are arranged in the second direction, the position conditions of the target heating elements may also be the first one sequentially arranged in the second direction, the first and second ones, or multiple ones arranged at intervals or dispersedly. The parameters of the target heating elements may be the number of target heating elements or the heating power. The number of target heating elements may be one or more. The heating power may be the total power of multiple heating elements 50 heated simultaneously, or the power of a single heating element 50.

The position, quantity, and power of the target heating elements requiring heating can be determined based on the ratio of the current cumulative heating duration to the total puff duration; alternatively, they can be determined based on whether the current cumulative heating duration is greater than a set cumulative heating duration. The power can be independently determined according to the cumulative heating duration. For example, the power may gradually increase as the cumulative heating duration increases, or first gradually increase and then gradually decrease as the cumulative heating duration increases.

Finally, in step S4, the control assembly 30 controls the target heating elements determined in step S3 to participate in heating.

This method of controlling heating elements 50 at different positions and quantities to heat sequentially or in order according to the cumulative heating duration and total puff duration helps reduce the heating duration of a single heating element 50 and the heating duration of the part of the aerosol generating article corresponding to each heating element 50. It helps avoid overheating of part of the aerosol generating article, prevents energy waste, improves heating efficiency and energy utilization rate, and enhances the battery life of the heat-not-burn device 100.

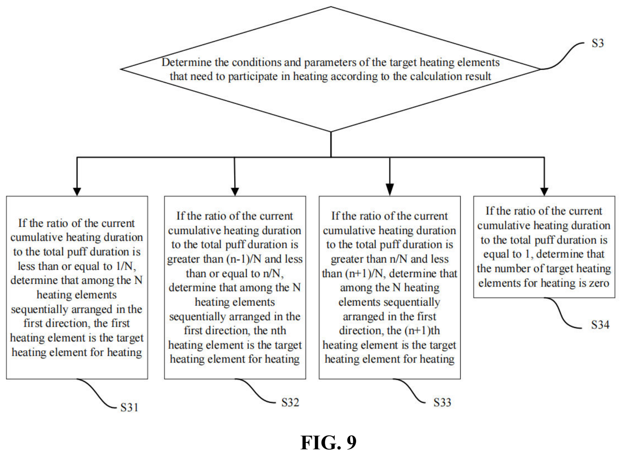

In some embodiments, please refer to FIG. 9. Step S3: Determining the conditions and parameters of the target heating elements that need to participate in heating according to the calculation result comprises:
S31: If the ratio of the current cumulative heating duration to the total puff duration is less than or equal to 1/N, determine that among the N heating elements sequentially arranged in the first direction, the first heating element is the target heating element participating in heating;
S32: If the ratio of the current cumulative heating duration to the total puff duration is greater than (n-1)/N and less than or equal to n/N, determine that among the N heating elements sequentially arranged in the first direction, the Nth heating element is the target heating element participating in heating;
S33: If the ratio of the current cumulative heating duration to the total puff duration is greater than n/N and less than (n+1)/N, determine that among the N heating elements sequentially arranged in the first direction, the (n+1)th heating element is the target heating element participating in heating;
S34: If the ratio of the current cumulative heating duration to the total puff duration is equal to 1, determine that the number of target heating elements participating in heating is zero;
wherein the first direction is the length direction of the aerosol generating article, N is the total number of heating elements 50, and n is a positive integer less than N.

The calculation result is the ratio of the current cumulative heating duration to the total puff duration, and the conditions and parameters of the target heating elements are the position conditions and quantity parameters of the target heating elements respectively.

In one example, the total number N of heating elements 50 is set to 2, that is, a first heating element 51 and a second heating element 52 are arranged along the length direction of the aerosol generating article, and the number and length of the heating teeth 501 in each heating element 50 are equal. Determine the ratio of the cumulative heating duration to the total puff duration: if the cumulative heating duration is less than or equal to half of the total puff duration, the first heating element 51 far from the mouthpiece 4 in the first direction is determined as the target heating element for heating; then the first heating element 51 is controlled to heat, while the second heating element 52 is kept in a non-heating state. If the cumulative heating duration is greater than half of the total puff duration and less than the total puff duration, the second heating element 52 close to the mouthpiece 4 in the first direction is determined as the target heating element for heating; then the second heating element 52 is controlled to heat, and the first heating element 51 is either kept non-heating or adjusted to a non-heating state. If the cumulative heating duration is equal to the total puff duration, that is, all aerosol generating articles are fully heated and all heating elements 50 have completed one heating cycle, all heating elements 50 are stopped from heating.

Of course, in other embodiments, the total number N of heating elements 50 may be 3 or more. If three heating elements 50 are provided, two first heating elements 51 and a second heating element 52 located between the two first heating elements 51 may be arranged, and the number and length of the heating teeth 501 in each heating element 50 are equal. If the cumulative heating duration is less than or equal to one-third of the total heating duration, only one of the first heating elements 51 is determined as the target heating element to start heating. If the cumulative heating duration is greater than one-third of the total heating duration and less than or equal to two-thirds of the total heating duration, only the second heating element 52 is determined as the target heating element to start heating. If the cumulative heating duration is greater than two-thirds of the total heating duration and less than the total heating duration, only the other first heating element 51 is determined as the target heating element to start heating. If the cumulative heating duration is equal to the total puff duration, that is, all aerosol generating articles are fully heated and all heating elements 50 have completed one heating cycle, all heating elements 50 are stopped from heating.

This can simulate the actual smoking process, enabling each part of the aerosol generating article in the first direction to be heated independently with equal heating duration for each part. It can avoid local overheating of the aerosol generating article that would produce toxic substances, or prevent some parts of the aerosol generating article from being insufficiently heated and thus unable to generate aerosol. This helps improve the smoking taste, heating efficiency, and energy utilization rate, and contributes to enhancing the battery life of the entire heat-not-burn device 100.

Specific examples have been used to illustrate the present invention above, which are only intended to help understand the present invention and are not intended to limit it. For those skilled in the art to which the present invention belongs, based on the idea of the present invention, several simple deductions, modifications, or substitutions can also be made.

## Claims

1. A heat-not-burning device, wherein the device comprises:
a housing having an accommodating cavity for accommodating an aerosol generating article;
a plurality of heating elements, wherein the plurality of heating elements are uniformly arranged on the cavity wall of the accommodating cavity for piercing into the aerosol generating article;
a control assembly mounted on the housing, wherein the control assembly is independently electrically connected to each of the heating elements, and the control assembly is configured to independently control the heating of each of the heating elements.

2. The heat-not-burning device according to Claim 1, wherein the accommodating cavity extends in a first direction, and the plurality of heating elements are arranged in the first direction; the control assembly is configured to sequentially control each of the heating elements to heat independently in the first direction.

3. The heat-not-burning device according to Claim 2, wherein the heating element comprises a plurality of heating teeth for piercing into the aerosol generating article; each heating tooth has an end portion and a tooth portion, the end portion is fixed on the cavity wall of the accommodating cavity and electrically connected to the control assembly, and the tooth portion protrudes from the end portion to pierce the aerosol generating article.

4. The heat-not-burning device according to claim 3, wherein the plurality of heating teeth are arranged at intervals in a second direction, and the second direction is perpendicular to the first direction.

5. The heat-not-burning device according to Claim 4, wherein within the same heating element, two adjacent heating teeth are staggered in the second direction.

6. The heat-not-burning device according to Claim 3, wherein a plurality of mounting seats are provided on the cavity wall of the accommodating cavity in a one-to-one arrangement with the heating teeth, and the heating teeth are electrically connected to the control assembly through the corresponding mounting seats; wherein the mounting seats comprise at least one first mounting seat and at least one second mounting seat, wherein the first mounting seat and the second mounting seat are arranged at intervals; wherein the end portion comprises a first connection end and a second connection end, the first connection end is connected to the first mounting seat, and the second connection end is connected to the second mounting seat.

7. The heat-not-burning device according to any one of Claims 1 to 6, wherein the housing comprises an upper cover and a lower cover; the upper cover is provided with a first accommodating groove, the lower cover is provided with a second accommodating groove, and the first accommodating groove and the second accommodating groove are mated and assembled to form the accommodating cavity; the housing comprises a first magnetic component disposed on the upper cover and a second magnetic component disposed on the lower cover, and the first magnetic component and the second magnetic component attract each other to lock the upper cover and the lower cover.

8. The heat-not-burning device according to Claim 7, wherein both the upper cover and the lower cover are provided with the heating elements; the control assembly comprises a first control unit mounted on the upper cover and a second control unit mounted on the lower cover, and the first control unit and the second control unit are electrically connected through a conductive connection structure; the conductive connection structure comprises a conductive hole and a conductive post matched with the conductive hole, the conductive hole is provided on one of the upper cover and the lower cover, and the conductive post is provided on the other one of the upper cover and the lower cover.

9. A heating method for a heat-not-burning device according to any one of Claim 1 to Claim 8, wherein the method comprises:
obtaining a current cumulative heating duration and a total puff duration of the heat-not-burning device;
performing analysis and calculation on the current cumulative heating duration and the total puff duration to determine a calculation result;
determining conditions and parameters of target heating elements required to participate in heating according to the calculation result;
controlling the target heating elements to heat respectively.

10. The heating method for a heat-not-burning device according to Claim 9,
wherein the step of determining conditions and parameters of target heating elements required to participate in heating according to the calculation result comprises:
if the ratio of the current cumulative heating duration to the total puff duration is less than or equal to 1/N, determining that among the N heating elements sequentially arranged in the first direction, the first heating element is the target heating element participating in heating;
if the ratio of the current cumulative heating duration to the total puff duration is greater than (n-1)/N and less than or equal to n/N, determining that among the N heating elements sequentially arranged in the first direction, the Nth heating element is the target heating element participating in heating;
if the ratio of the current cumulative heating duration to the total puff duration is greater than n/N and less than (n+1)/N, determining that among the N heating elements sequentially arranged in the first direction, the (n+1)th heating element is the target heating element participating in heating;
if the ratio of the current cumulative heating duration to the total puff duration is equal to 1, determining that the number of target heating elements participating in heating is zero;
wherein the first direction is the length direction of the aerosol generating article, N is the total number of heating elements, and n is a positive integer less than N.
